# EUROPÄISCHE PATENTSCHRIFT

(11) **EP 0 760 270 B1**
(45) Veröffentlichungstag und Bekanntmachung des Hinweises auf die Patenterteilung: **13.10.1999**
(21) Anmeldenummer: 96113681.9
(22) Anmeldetag: 27.08.1996
(51) Int. Cl.: B23G 5/00

(54) **Gewindebohrer**
Tap
Taraud

(30) Priorität: 30.08.1995 DE 19531810
(43) Veröffentlichungstag der Anmeldung: 05.03.1997
(73) Patentinhaber: Ernst Reime GmbH & Co. KG Spezialfabrik für Präzisionsgewindeschneidwerkzeuge, 91257 Pegnitz-Neudorf (DE)
(72) Erfinder:
(74) Vertreter: Tergau, Enno, Dipl.-Ing.

(56) Entgegenhaltungen:
- EP-A- 0 431 681
- DE-U- 8 901 178
- US-A- 4 762 444
- TOOLING AND PRODUCTION, Bd. 60 , Nr. 12, 1995, SOLON US, Seite 45 XP000489728

## Beschreibung

Die Erfindung betrifft einen Gewindebohrer gemäß Oberbegriff des Anspruches 1 (siehe US-A 4 762 444) und gemäß Patentanspruch 9 ein Verfahren zur Herstellung eines solchen Gewindebohrers.

Bei Gewindebohrern ganz allgemein ist die Zuführung von Kühlschmiermittel - nachstehend kurz 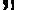 Kühlmittel" - durch das Werkzeug in den Schneidenbereich geläufiger Stand der Technik. Für die Herstellung von Sackloch-Gewinden ist die Kühlmittelzufuhr problemlos. Es genügt ein einziger Kühlkanal, der zweckmäßig koaxial zur Bohrerachse angeordnet ist. Es muß nur darauf geachtet werden, daß durch den Kühlkanal nicht die Bruchanfälligkeit unzulässig erhöht wird.

Ein koaxial durchgehend in den Bohrer eingebrachter Kühlkanal ist für Gewindebohrer zur Herstellung von Durchgangsgewinden unbrauchbar. Der Kühlmittelstrahl würde ohne Wirkung durch das nach unten offene Kernloch abgeführt, ohne im Bereich der Schneiden wirksam zu werden. Hier verwendet man herkömmlich an Stelle eines zentralen Kühlkanalaustritts an der Bohrerstirnseite in mehr seitlicher Richtung in die Spannuten ausmündende Stichkanäle zu einem zentralen Kühlkanal, der an der Bohrerstirnseite verschlossen ist. In der Regel weisen Gewindebohrer mehrere Spannuten auf und jeder Spannut ist dann ein solcher Stichkanal zugeordnet. Er verläuft nicht radial, was seine Einbringung fertigungstechnisch erleichtern würde, sondern in einem sich in Richtung auf die Bohrerstirnfläche öffnenden spitzen Winkel zur Bohrerachse. Das macht die Einbringung der Stichkanäle fertigungstechnisch aufwendig, zumal sie in einer der Anzahl der Spannuten entsprechenden Zahl benötigt werden. Das Einbringen durch Bohren oder Fräsen kann nicht im warmbehandelten Zustand des Bohrers erfolgen. Ist dieser nämlich bereits gehärtet, so kommt nur noch eine Formgebung durch Erodieren in Betracht.

Bei normalen Bohrern auch mit gedrallten Spannuten ist es grundsätzlich bekannt, die Bohrerrohlinge aus stangenförmigem Vormaterial herzustellen, welches in einem Zieh- oder Pressverfahren auf den Ausgangsdurchmesser gebracht ist. Hier ist es weiter bekannt, bereits beim Zieh- oder Pressvorgang Kühlkanäle einzuformen. Für drallgenutete Spiralbohrer ist es dabei weiter bekannt, diese Kühlkanäle in im wesentlichen um die Stangenachse gedrallter Form einzubringen. Diese Technologie ist z.B. beschrieben in US 2 811 875, DE 36 01 385 oder EP 431 681. Bei Spiralbohrern tritt aber der Kühlkanal an der Bohrerstirnfläche aus, weil die Bohrerstirnfläche Bestandteil der Werkzeugschneiden ist.

Der Erfindung liegt die Aufgabe zugrunde, Gewindebohrer der eingangs genannten Art in einfacherer Weise mit einer Kühlung zu versehen. Diese Aufgabe wird durch einen Gewindebohrer mit den Merkmalen gemäß Anspruch 1 gelöst.

Die Lösung beruht auf den folgenden Überlegungen: In aller Regel erfolgt die Herstellung von Gewindebohrern durch spanabhebende Bearbeitung. Dies bezieht sich nicht nur auf das Gewindeprofil sondern auch auf die Spannuten, die ja im Anschnitteil auch die Spanflächen der gewindeformenden Schneiden bilden. Die Spannuten werden spanabhebend ins Volle geformt. Dies geschieht in aller Regel zunächst durch Fräsen in das noch nicht warmbehandelte Stangenmaterial und in der Endbearbeitung durch Schleifen des bereits warmbehandelten Rohlings. Sind nun im Vollmaterial vor der Einbringung der Spannuten die Kühlkanäle bereits vorhanden, so entstehen bei sinngemäßer Positionierung und Erstreckung (Drall) der Kühlkanäle und Einbringung der Spannuten in Anpassung daran zwangsläufig Schnittstellen, in denen ein Kühlkanal in eine Spannut ausmündet. Die Lage der Mündung läßt sich leicht und einfach vorbestimmen. Ein besonderer Vorteil besteht darin, daß der Gewindebohrerhersteller mit den Kühlkanälen bereits vorkonfektioniertes Stangenmaterial beziehen kann und daher keine aufwendigen Fertigungseinrichtungen zur Herstellung herkömmlicher, eingangs erläuterter Stichkanäle benötigt. Wenn von der grundsätzlichen Geläufigkeit spanloser Einformung von gegebenenfalls auch gedrallten Kühlkanälen in Stangenmaterial gesprochen ist, so muß die Vorfertigung der Kühlkanäle nicht in diesem spanlosen Verfahren erfolgen. Es ist selbstverständlich auch denkbar, die Kühlkanäle spangebend in die Rohlinge einzubringen, bevor der eigentliche Formgebungsvorgang der Schneidengeometrie beginnt. Das wird aber kaum vorteilhaft sein.

Ganz allgemein ist es zur Herstellung der erwähnten Schnittstellen, also zur Positionierung und Ausrichtung der Mündungen der Kühlkanäle nur erforderlich, daß die jeweilige Spannut mit einem Kühlkanal einen spitzen Winkel bildet, so daß der Kühlmittelstrahl gegen die im Schnitt stehenden Spanflächen gerichtetet ist.

Weitere vorteilhafte Erfindungsmerkmale sind in den abhängigen Ansprüchen 2-9 niedergelegt.

Die Erfindung wird anhand von in den Figuren dargestellten Beispielen näher erläutert. Es zeigen:
- Fig. 1: die schematische Seitenansicht eines drallgenuteten Gewindebohrers mit gewendeltem Kühlkanal.
- Fig. 2: eine Seitenansicht analog Fig. 1 eines Gewindebohrers mit als Schälschliffnut ausgebildeter Spannut.

Der Gewindebohrer besteht im wesentlichen aus dem Schaft 1 und dem an sein Stirnende 2 angeformten Gewindeteil 3. Die Spannut 4 im Gewindeteil 3 ist drallgenutet. Ihr Verlauf bildet eine Schraubenlinie mit der Bohrerachse 5 als Mittelachse. Der Anschnitteil des Gewindeteils 3 trägt die Positionsziffer 6.

Der Bohrerschaft 1 ist von einem Kühlkanal 7 durchsetzt, der in Längsrichtung 8 des Bohrerverlaufs ebenfalls einen schraubenlinienförmigen Verlauf aufweist, und zwar ebenfalls mit der Bohrerachse 5 als Schraubenlinienachse. Der Kühlkanal 7 schneidet im Bereich des Gewindeteils 3 die Spannut 4. Die Schnittstelle bildet eine Mündung 9 des Kühlkanals, die damit in der Spannut 4 positioniert ist. Die Positionierung innerhalb der Spannut 4 läßt sich leicht und einfach vorbestimmen.

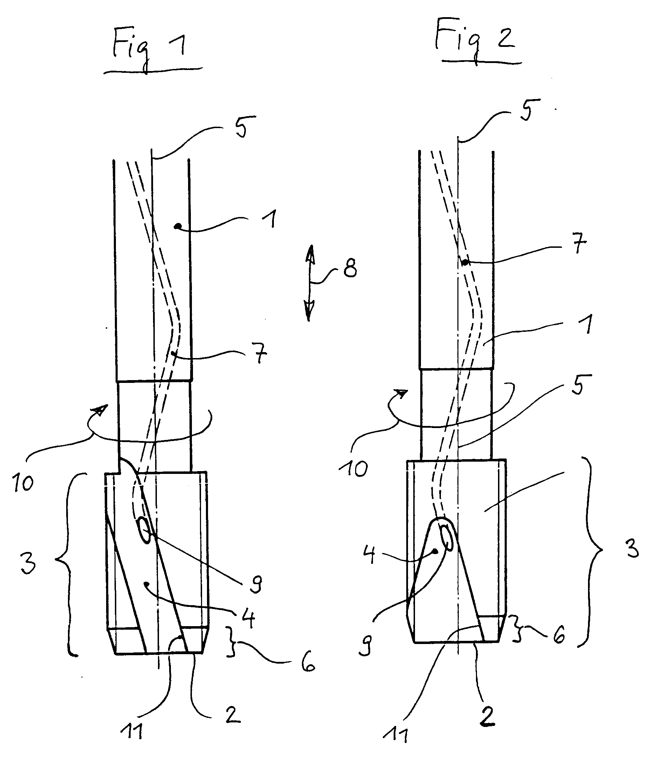

Der Gewindebohrer gemäß Fig. 2 unterscheidet sich von dem gemäß Fig. 1 im wesentlichen durch Ausbildung der Spannut 4 als Schälschliffnut. Die Einzelheiten des Gewindebohrers gemäß Fig. 2 entsprechen den anhand von Fig. 1 erläuterten Merkmalen.

Es handelt sich bei den Ausführungsbeispielen um rechtsschneidende Gewindebohrer mit Schnittrichtung 10 und Spanflächenbereich 11 der schneidenden Gewindezähne (Anschnitteil 6), der von dem aus den Kanalmündungen 9 austretenden Kühlmittelstrahl beaufschlagt ist. Die Kanalmündungen 9 liegen im Führungsbereich, also außerhalb des Anschnitteils 6 des Gewindeteiles 3. Der Erfindungsgegenstand läßt sich besonders vorteilhaft bei Gewindebohrern mit gedrallten Spannuten gemäß Fig. 1 oder solchen mit gerader Spannut, aber mit einem Schälanschnitt entsprechend Fig. 2 einsetzen. Ein solcher gerade genuteter Gewindebohrer mit Schälanschnitt ist z.B. Gegenstand einer Abbildung im 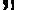 Handbuch der Fertigungstechnik" von Spur und Stöferle, Bd. 3/2 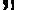 Spanen", Carl Hanser Verlag München-Wien 1980, S. 536, Bild 28B. Bei den Ausführungsbeispielen dieser Figurenbeschreibung ist jeweils nur eine Spannut 4 und ein dieser zugeordneter Kühlkanal 7 dargestellt. Hinsichtlich näherer Einzelheiten über den geometrischen Aufbau grundsätzlich eines Gewindebohrers wird auf die vorstehende Literaturstelle verwiesen.

Durch die erfindungsgemäße Ausgestaltung des Gewindebohrers trifft der aus dem gewendelten Kühlkanal 7 austretende Schmiermittelstrahl exakt auf den Anschnittbereich 6. Dadurch wird während des gesamten Zerspanungsvorganges immer eine ausreichende Schmierung und/oder Kühlung gewährleistet, und das vom Augenblick des Anschneidens bis zum Austritt des Gewindebohrers aus dem Durchgangsloch. Das zur Verfügung stehende Kühl- bzw. Schmiermittel kann auf diese Weise vollständig genutzt werden. Der Spannutengrund weist keine ins Gewicht fallende Ausnehmung auf, die etwa eine Behinderung der Spanabfuhr bedeuten könnte. Der gerichtete Kühlmittelstrahl führt zwangsläufig zu einer vollständigen Spanabfuhr in Schneidrichtung. Das ist auch unabhängig davon, ob kurz- oder langspanende Werkstoffqualitäten vorliegen. Durch die erfindungsgemäße Anordnung der Kühlkanäle können außer den üblichen Emulsionen auch gasförmige Mittel, z.B. Druckluft zum Trockenschneiden oder ein Luft-Öl-Gemisch (Mindermengenschmierung) gezielt zugeführt werden.

### Bezugszeichenliste

- 1: Schaft
- 2: Stirnende
- 3: Gewindeteil
- 4: Spannut
- 5: Bohrerachse
- 6: Anschnitteil
- 7: Kühlkanal
- 8: Längsrichtung
- 9: Mündung
- 10: Schnittrichtung
- 11: Spanflächenbereich

## Patentansprüche

1. **.** Spanender Gewindebohrer für Durchgangslochgewinde mit einem Zuführungskanal (7) für flüssiges und/oder gasförmiges Kühlschmiermittel,
dadurch gekennzeichnet,
- daß eine der Zahl der Spannuten (4) entsprechende Anzahl von die Bohrerachse (5) schraubenlinienförmig umgebenden, umfänglich geschlossenen Kanälen (7) im stangenförmigen Vormaterial des Bohrerrohlings vorgeformt ist und
- daß die Spannuten (4) derart in den Bohrerrohling eingeschliffen sind,
-- daß jeweils ein Kanal (7) in eine Spannut (4) ausmündet und
-- daß der austretende Kühlschmiermittelstrahl durch entsprechende Positionierung und Ausrichtung der jeweiligen Kanalmündung (9) gegen die Spanfläche (11) der schneidenden Gewindezähne im Anschnitteil (6) gerichtet ist.

2. **.** Gewindebohrer nach Anspruch 1,
dadurch gekennzeichnet,
daß die Kanalmündungen (9) im Führungsbereich des Gewindeteils (3) liegen.

3. **.** Gewindebohrer nach Anspruch 1 oder 2,
dadurch gekennzeichnet,
daß die Kanalmündungen (9) im Bereich des schaftseitigen Endes der Spannuten (4) positioniert sind.

4. **.** Gewindebohrer nach einem der vorhergehenden Ansprüche,
gekennzeichnet durch
eine Mündung (9) der Kühlkanäle (7) im Bereich der Talsohle des Querschnitts einer Spannut (4).

5. **.** Gewindebohrer nach einem oder mehreren der vorhergehenden Ansprüche,
dadurch gekennzeichnet,
daß die Spannut (4) unter einem horizontalen und vertikalen Neigungswinkel als Schälschliffnut eingebracht ist.

6. **.** Geradegenuteter Gewindebohrer mit Schälschliff nach
Anspruch 5,
gekennzeichnet durch eine Positionierung der Mündungen (9) am rückseitigen Ende der Schälschliffnut.

7. **.** Gewindebohrer nach einem oder mehreren der vorhergehenden Ansprüche,
dadurch gekennzeichnet,
daß die Mündungen (9) sämtlicher Kanäle (7) auf einem gemeinsamen Teilkreis angeordnet sind.

8. **.** Gewindebohrer nach einem oder mehreren der vorhergehenden Ansprüche,
dadurch gekennzeichnet,
daß der Durchmesser des die Kanäle (7) umgebenden Hüllzylinders kleiner ist als der Seelendurchmesser der Spannuten (4).

9. **.** Verfahren zur Herstellung eines Gewindebohrers nach einem oder mehreren der vorhergehenden Ansprüche,
dadurch gekennzeichnet,
daß seine Spannuten (4) in einen in an sich bekannter Weise mit spanlos geformten, gewendelten Kühlkanälen (7) vorgefertigten Rohling von etwa zylindrischer Ausgangsform eingeformt sind.

## Claims

1. Cutting tap for throughhole threads, having a feed passage (7) for liquid and/or gaseous cooling lubricant, characterized in that
- a number of peripherally closed passages (7) helically surrounding the tap axis (5), corresponding to the number of flutes (4) are preformed in the bar-shaped starting material of the tap blank, and
- the flutes (4) are ground in the tap blank in such a way that
-- in each case a passage (7) opens out into a flute (4) and
-- the discharging cooling-lubricant stream, by appropriate positioning and orientation of the respective passage orifice (9), is directed towards the cutting face (11) of the cutting thread teeth in the chamfer part (6).

2. Tap according to Claim 1, characterized in that the passage orifices (9) lie in the guide region of the thread part (3).

3. Tap according to Claim 1 or 2, characterized in that the passage orifices (9) are positioned in the region of the shank-side end of the flutes (4).

4. Tap according to one of the preceding claims, characterized by an orifice (9) of the cooling passages (7) in the region of the valley bottom of the cross section of a flute (4).

5. Tap according to one or more of the preceding claims, characterized in that the flute (4) is made as a curling flute at a horizontal and a vertical angle of inclination.

6. Straight-fluted tap with curling cut according to Claim 5, characterized by positioning of the orifices (9) at the rear end of the curling flute.

7. Tap according to one or more of the preceding claims, characterized in that the orifices (9) of all the passages (7) are arranged on a common pitch circle.

8. Tap according to one or more of the preceding claims, characterized in that the diameter of the envelope cylinder surrounding the passages (7) is smaller than the core diameter of the flutes (4).

9. Method of producing a tap according to one or more of the preceding claims, characterized in that its flutes (4) are formed in a blank of approximately cylindrical initial shape, the blank being prefabricated in a manner known per se with helical cooling passages (7) formed without chip removal.

## Revendications

1. Taraud pour la réalisation de taraudages par enlèvement de matière dans des perçages traversants, comprenant un canal d'admission (7) pour un agent de lubrification et de refroidissement liquide et/ou gazeux,
caractérisé en ce que
- dans le matériau précurseur en forme de barre de l'ébauche de taraud, des canaux (7) fermés à la périphérie et entourant sous forme d'une ligne hélicoïdale l'axe de taraud (5) sont préformés, en nombre correspondant au nombre des gorges à copeaux (4), et
- les gorges à copeaux (4) sont meulées dans l'ébauche de taraud de telle manière que :
-- un canal (7) débouche respectivement dans une gorge à copeaux (4), et
-- le jet d'agent de lubrification et de refroidissement sortant est dirigé vers la surface de coupe (11) de la dent de taraudage dans la partie de coupe (6) par un positionnement et une orientation correspondants de l'embouchure de canal respective (9).

2. Taraud selon la revendication 1,
caractérisé en ce que
les embouchures de canaux (9) sont situées dans la zone de guidage de la partie à pas de vis (3).

3. Taraud selon l'une ou l'autre des revendications 1 et 2,
caractérisé en ce que
les embouchures de canaux (9) sont positionnées dans la région de l'extrémité côté tige des gorges à copeaux (4).

4. Taraud selon l'une des revendications précédentes,
caractérisé en ce que
l'embouchure (9) des canaux de refroidissement (7) est située dans la région du fond de la section transversale d'une gorge à copeaux (4).

5. Taraud selon l'une ou plusieurs des revendications précédentes,
caractérisé en ce que
la gorge à copeaux (4) est ménagée, sous forme d'une gorge meulée rectifiée, sous un angle d'inclinaison horizontal et vertical.

6. Taraud à gorges droites meulé rectifié, selon la revendication 5,
caractérisé en ce que
les embouchures (9) sont positionnées à l'extrémité postérieure de la gorge meulée rectifiée.

7. Taraud selon l'une ou plusieurs des revendications précédentes,
caractérisé en ce que
les embouchures (9) de tous les canaux (7) sont agencées sur un cercle partiel commun.

8. Taraud selon l'une ou plusieurs des revendications précédentes,
caractérisé en ce que
le diamètre du cylindre enveloppe entourant les canaux (7) est inférieur au diamètre au coeur des gorges à copeaux (4).

9. Procédé pour réaliser un taraud selon l'une ou plusieurs des revendications précédentes,
caractérisé en ce que
ses gorges à copeaux (4) sont formées dans une ébauche, de forme départ approximativement cylindrique, préfabriquée d'une manière connue en soi, avec des canaux de refroidissement (7) hélicoïdaux réalisés sans enlèvement de matière.
